# EUROPEAN PATENT APPLICATION

(11) **EP 1 168 871 A1**
(43) Date of publication of application: **02.01.2002**
(21) Application number: 00401764.6
(22) Date of filing: 20.06.2000
(51) Int. Cl.: H04Q 7/38, H04L 12/56, H04L 12/28, H04L 29/06

(54) **Telecommunication system with real time protocol synchronization after hand-over procedure**

(71) Applicant: ALCATEL, 75008 Paris (FR)
(72) Inventor: Leroy, Suresh André Jean-Marie, 2100 Deurne (BE); De Vriendt, Johan André, 9051 Afsnee (BE)
(74) Representative: Narmon, Gisèle Marie Thérèse

(57) **Abstract**

Synchronization of a hand-over procedure of a mobile telecommunication terminal (MT) coupled to a second terminal (TS) via a mobile access network (UTRAN), a packet switching network (IP), and an external telecommunication network (TL). During the hand-over (MT1-MT2), the mobile terminal switches form a first media gateway (MG1) to a second media gateway (MG2), each interfacing the mobile and the packet switching networks and producing different series of reference values associated to packets transmitted to an anchor media gateway (MG0), interfacing the packet switching network and the external network. After the hand-over, the anchor media gateway (MG0) calculates the difference between a reference value received from the second media gateway (MG2) and a reference value that had been received from the first media gateway if no hand-over had occurred. This difference is then returned to the second media gateway to synchronize its series therewith, e.g. by subtracting the received difference from the actual reference number of the series. When the second media gateway is synchronized, no further operation is required from the anchor media gateway.

## Description

The present invention relates to a telecommunication system including a mobile access network coupled via a plurality of media gateways to a packet switching network core network comprising an intermediate gateway adapted to couple said media gateways to an external telecommunication network, said access system being adapted to establish via said intermediate gateway a communication between a mobile telecommunication terminal coupled to said mobile access network and a second telecommunication terminal coupled to said external telecommunication network, said mobile telecommunication terminal being adapted to be coupled to a first media gateway of said plurality before a hand-over procedure and to be coupled to a second media gateway of said plurality after said hand-over procedure, said first/second media gateway being adapted to encapsulate data from said mobile terminal into packets and to transmit, to said intermediate gateway, said packets each associated to a distinct reference value belonging to a predetermined series of reference values, a first predetermined series of reference values produced by said first media gateway being different from a second predetermined series of reference values produced by said second media gateway.

In such a telecommunication system, the mobile access network generally operates according a "circuit based" protocol, whilst the packet switching network operates according to a "packet based" protocol. As a consequence, to establish a communication between the mobile terminal coupled to a media gateway, and the second terminal coupled to the intermediate gateway, a translation from circuit based protocol to packet based protocol has to be made somewhere in the network. This translation is preferably done in the media gateway. In the media gateway, not only the data received from the mobile terminal is encapsulated in packets, but also each packet is associated to a distinct set of reference values of a series generated by the media gateway. Successive packets transmitted by the media gateway to the intermediate gateway receive reference values belonging to a predetermined series. Owing to these reference values that are indicative of the packet stream, the intermediate gateway is adapted to further transmit the data to the second telecommunication terminal via the external telecommunication network. When the mobile telecommunication terminal moves to another location a change of media gateway may occur, e.g. from the first media gateway to the second media gateway. This change belongs to a hand-over procedure. Similarly to the first media gateway, the second media gateway also generates reference values of a predetermined series, but this second series may be different from the first series produced by the first media gateway. As a result, the hand-over procedure causes a sudden unpredictable change or jump in the succession of reference values received in the intermediate gateway.

An object of the present invention is to provide a telecommunication system of the above type but wherein a miss-alignment of the reference values consecutive to a hand-over procedure will not cause intolerable disruptions in the communication or applications to crash, while avoiding excessive additional operations to be performed by the gateways. Additionally, the operations of the mobile part of the telecommunication system should be hidden to the fixed part thereof.

According to the invention, this object is achieved due to the fact that said intermediate gateway is adapted to calculate a predetermined relation between the reference values of said second predetermined series and the reference values of said first predetermined series, that said intermediate gateway is further adapted to transmit said predetermined relation to said second media gateway, and that said second media gateway is adapted to modify said second predetermined series of reference values in order to synchronize said second predetermined series with said first predetermined series according to said predetermined relation received from said intermediate gateway.

In this way, the intermediate gateway only performs some temporary calculation on the reference values immediately after the hand-over procedure. As soon as the predetermined relation is calculated and transmitted to the second media gateway, the latter synchronizes its second predetermined series of references values to the first predetermined series as produced by the first media gateway. After this correction, the reference values received by the intermediate gateway follow again the first predetermined series and no other calculation is required. The load of the intermediate gateway is thus only increased during a transient period until reference values corresponding to those of the earlier first predetermined series are received again. The hand-over procedure is said performed with real-time protocol synchronization. Moreover, the change of media gateway is hidden to the external telecommunication network.

Another characterizing embodiment of the present invention is that said predetermined relation calculated by said media gateway device is the difference between a reference value of said second predetermined series and a corresponding reference value of said first predetermined series.

Instead of operating on an absolute value to synchronize the series of reference values, a delta value is preferably used. This delta value corresponds to the difference between the reference value received from the second media gateway and a reference value that had been received from the first media gateway if no hand-over had occurred. This difference is then transmitted to the second media gateway. Since it's not an absolute value but a delta, timing is no issue.

Also another characterizing embodiment of the present invention is that said second media gateway is adapted to modify said second predetermined series by subtracting said difference from the reference values of said second predetermined series.

In this way, at the reception of the above difference or delta value, the second media gateway easily synchronizes its series of reference values.

The present invention further also relates to a method to handle a hand-over procedure of a mobile telecommunication terminal coupled to a second telecommunication terminal via a media gateway of a mobile telecommunication network and an intermediate gateway of a packet switching network, said mobile telecommunication terminal being coupled to a first media gateway before said hand-over procedure and being coupled to a second media gateway after said hand-over procedure. In said method, the media gateway coupled to the mobile terminal:
- generates reference values of a predetermined series,
- encapsulates data from the mobile terminal into packets and associates each packet with a distinct one of said reference values, and
- transmits the packets and the associated reference values to said intermediate gateway,
the reference values of a first predetermined series generated by said first media gateway being different from the reference values of a second predetermined series generated by said second media gateway.

An object of the present method is to prevent intolerable disruptions in the communication between the mobile terminal and the second terminal due to a miss-alignment of the reference values of the first and the second predetermined series consecutive to the hand-over procedure. The overload of operations in the gateways caused by the hand-over procedure should also be reduced as much as possible and, additionally, the mobility operations should be hidden to the fixed operations of the communication.

According to the invention, this object is achieved due to the fact that, after said hand-over procedure, said intermediate gateway calculates the difference between a reference value of said second predetermined series received from said second media gateway and a corresponding reference value of said first predetermined series, that, after the calculation, the intermediate gateway transmits said difference to said second media gateway, and that, upon reception of said difference, said second media gateway modifies said second predetermined series of reference values in order to synchronize said second predetermined series with said first predetermined series according to said difference received from said intermediate gateway.

In this way, as soon as the second predetermined series is synchronized to the first predetermined series of reference values, the intermediate gateway and the second media gateway have no longer to perform any calculation, nor modification. The second terminal is not affected by these transient changes from the first predetermined series of reference values to the second predetermined series and then again to an equivalent of the first predetermined series, i.e. the synchronized second predetermined series. As a result, the "mobile" operations concerning the mobile terminal are hidden to the "fixed" operations concerning the second terminal. Moreover, because a difference or delta value is used instead of an absolute value to synchronize the second predetermined series of reference values, timing is no issue. It is thus not important how long the calculation by the intermediate gateway takes, nor how long it takes to transmit the calculated difference to the second media gateway, nor the time taken by this second media gateway to synchronize its second predetermined series to the first one.

Another characterizing embodiment of the present method is that said second media gateway modifies said second predetermined series by subtracting said difference from the reference values of said second predetermined series.

The present method is fully applicable during a hand-over procedure with real-time protocol synchronization in a telecommunication system as mentioned above.

Further characterizing embodiments of the present invention are mentioned in the appended claims.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

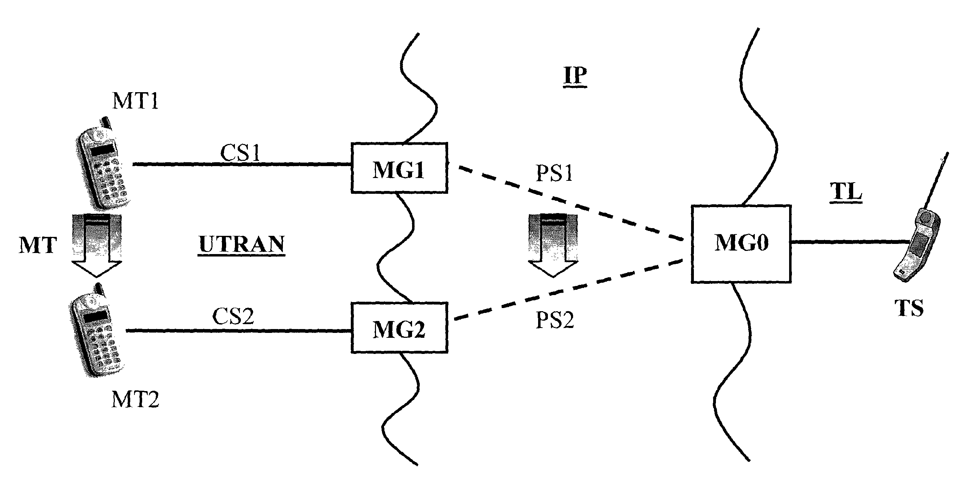

The above and other objects and features of the invention will become more apparent and the invention itself will be best understood by referring to the following description of an embodiment taken in conjunction with the accompanying drawing wherein the figure represents a telecommunication system comprising a mobile network UTRAN coupled to a packet switching network IP via a plurality of media gateways MG1, MG2 connected to an intermediate gateway MG0, the telecommunication system being adapted, according to the invention, to perform real-time protocol synchronization after a hand-over procedure from MG1 to MG2.

The telecommunication system shown in the figure comprises a mobile telecommunication network UTRAN, a packet switched network IP and a third or external telecommunication network TL, all interconnected. The system is adapted to establish and to maintain a communication between a mobile telecommunication terminal MT, e.g. a GSM terminal, moving within the mobile network UTRAN, and a second telecommunication terminal TS coupled to the external network TL.

The mobile network is a Universal Mobile Telecommunication System [UMTS] Terrestrial Radio Access Network UTRAN of the Circuit Switched [CS] type. The mobile network UTRAN is provided with several media gateways such as MG1 and MG2 interfacing with the packet switched network IP. The packet switched network IP is of the Internet type, and therein, the media gateways MG1, MG2 are adapted to be connected to an intermediate gateway or anchor media gateway MG0. The intermediate gateway MG0 is further connected to the external telecommunication network TL. This external network may be another Internet Protocol [IP] network, a Public Switched Telephone Network [PSTN] or any other Circuit Switched [CS] network to which the second terminal TS is connected.

By way of an example of operation of the present telecommunication system, it will be supposed hereafter that a communication is established between the mobile terminal MT and the second terminal TS, and that during this communication the mobile terminal MT is at a first location MT1 and then moves to a second location MT2.

As shown in the figure, when the mobile terminal is at MT1, data is transferred over a circuit switched path CS1 of the mobile network UTRAN between MT1 and the first media gateway MG1. Between MG1 and the anchor media gateway MG0, the data is transferred in packets over a packet switched path PS1 of the packet switching network IP. The data is further transferred through the telecommunication network TL, between MG0 and the second terminal TS, as a flow of data or in packets according to the type of circuit switched or packet switched protocol used by this network TL.

The media gateway MG1 is a point in the network where upstream data, e.g. voice, coming from the mobile terminal MT is encapsulated in Real-time Protocol [RTP] packets. MG1 is thus an upstream RTP packet source for the packet switched network IP. The RTP packets are associated to reference values such as timestamps and sequence numbers indicative of the real-time packet stream. Generally, these reference values are included in the header fields of the packets. Timestamps are reference values allocated by a clock producing a predetermined series of such values each corresponding to a timestamp, whilst the sequence numbers preferably belong to a predetermined series of successive reference values. The difference between series of sequence numbers and series of timestamps is that, in function of the flow of transmitted packets, some gaps may exist between two timestamps of a series (e.g. 10 - 15 - 18 - 22), whilst the sequence numbers of a series successively follow each other (e.g. 146 - 147 - 148 - 149).

From the media gateway MG1, the upstream packets, each associated to their distinct reference value(s), are transmitted through the packet switching network IP to the anchor media gateway MG0 via the path PS1. In MG0, the packets may be transmitted as such to the second terminal TS in case the external network TL is a packet switching network or are translated back into a flow of data prior to be transferred to TS in case TL is a circuit switching network.

In the downstream direction towards the mobile terminal MT1, a similar process is applied, the terminal TS or a media gateway producing then a predetermined series of reference values associated to the packets transmitted to the media gateway MG1 over the path PS1 and MG1 translating the received packets into a flow of data transferred over the path CS1.

When the mobile terminal MT moves from the first location MT1 to the second location MT2, it may no longer be connected to the first media gateway MG1 but has to be connected to the closer second media gateway MG2, via the circuit switched path CS2. The packet switched path PS1 is then replaced by a packet switched path PS2.

The second media gateway MG2 is similar to the first media gateway MG1 described above and performs thus similar operations. However, the reference values used by MG2 may be shifted with respect to those used at the same time by MG1. For instance, the sequence numbers 146 - 147 - 148 - 149 of the above first predetermined series used by MG1 may correspond to sequence numbers 23 - 24 - 25 - 26 of a second predetermined series simultaneously used by MG2. As a result, if the hand-over from MG1 to MG2 occurs, e.g., after the reference values 146 - 147 of the first series, the next following reference numbers received by the anchor media gateway MG0 will be 25 - 26 of the second series. This sudden unpredictable jump in the reference values - that may be sequence numbers and/or timestamps - may cause intolerable disruption or rejection of the communication and even applications to crash whereby it needs to be corrected as fast as possible. To prevent the miss-alignment of the reference values to be further transmitted to the external network TL, the anchor media gateway MG0 detects the changes and performs a temporary recalculation of the reference values in the header fields of the RTP packets.

The anchor media gateway MG0 instantly detects that the RTP packets stream is now coming from the new media gateway MG2 based on the source IP address thereof. MG0 then calculates the difference between the old and the new reference values in the RTP packets header fields. This difference or delta value is then sent to the new RTP source, i.e. the second media gateway MG2.

At the reception of the difference or delta value from the anchor media gateway MG0, the second media gateway MG2 synchronizes its second predetermined series of reference values to the former first predetermined series of reference values. This synchronization is for instance done by subtracting the received difference from the actual reference value. Once the second media gateway MG2 is synchronized, the anchor media gateway MG0 may stop the calculation of the delta values.

It is to be noted that since no absolute value but a delta value is used by the media gateways MG0 and MG2, timing is not an issue. In other words, it is not important how long it takes to calculate delta value by the anchor media gateway MG0, nor to transmit this delta value to the second media gateway MG2, nor to synchronize the second predetermined series to the first one. Additionally, the overload of the anchor media gateway MG0 caused by the calculation of the difference is only temporary, until the new reference values corresponding to those of the earlier first series are received from MG2. This hand-over procedure relates thus to a real-time protocol synchronization.

It should also be remarked that there is no problem for downstream flows of RTP packets from the second terminal TS to the mobile terminal MT. Indeed, whether the mobile terminal MT is at the first location MT1 or at the second location MT2, the RTP source, i.e. the anchor media gateway MG0 or terminal TS, stay fixed. There is thus no change in the series of reference values generated by this unique source and received either by the first MG1 or by the second MG2 media gateway.

It is further also to be noted that in case the external telecommunication network TL is a packet switching network, the anchor media gateway MG0 may update the reference values in the header fields of the RTP packets with the calculated difference, until the synchronization has occurred. As a result, no jump will appear in the reference values associated to the packets then received by the second terminal TS so that the changes of media gateway form MG1 to MG2, i.e. the hand-over operation in the mobile network, is hidden to the fixed external telecommunication network TL.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Telecommunication system including a mobile access network (UTRAN) coupled via a plurality of media gateways (MG1, MG2) to a packet switching network (IP) comprising an intermediate gateway (MG0) adapted to couple said media gateways to an external telecommunication network (TL),
said telecommunication system being adapted to establish via said intermediate gateway (MG0) a communication between a mobile telecommunication terminal (MT) coupled to said mobile access network (UTRAN) and a second telecommunication terminal (TS) coupled to said external telecommunication network (TL),
said mobile telecommunication terminal (MT) being adapted to be coupled to a first media gateway (MG1) of said plurality before a hand-over procedure and to be coupled to a second media gateway (MG2) of said plurality after said hand-over procedure,
said first/second media gateway (MG1/MG2) being adapted to encapsulate data from said mobile terminal into packets and to transmit, to said intermediate gateway (MG0), said packets each associated to a distinct reference value belonging to a predetermined series of reference values, a first predetermined series of reference values produced by said first media gateway (MG1) being different from a second predetermined series of reference values produced by said second media gateway (MG2),
***characterized in that*** said intermediate gateway (MG0) is adapted to calculate a predetermined relation between the reference values of said second predetermined series and the reference values of said first predetermined series,
***in that*** said intermediate gateway (MG0) is further adapted to transmit said predetermined relation to said second media gateway (MG2),
***and in that*** said second media gateway (MG2) is adapted to modify said second predetermined series of reference values in order to synchronize said second predetermined series with said first predetermined series according to said predetermined relation received from said intermediate gateway (MG0).

2. Telecommunication system according to claim 1,
***characterized in that*** said predetermined relation calculated by said media gateway device (MG0) is the difference between a reference value of said second predetermined series and a corresponding reference value of said first predetermined series.

3. Telecommunication system according to claim 2,
***characterized in that*** said second media gateway (MG2) is adapted to modify said second predetermined series by subtracting said difference from the reference values of said second predetermined series.

4. Telecommunication system according to claim 1,
***characterized in that*** said mobile access network (UTRAN) is a circuit switched telecommunication network.

5. Telecommunication system according to claim 1,
***characterized in that*** said mobile access network (UTRAN) is a Terrestrial Radio Access Network [UTRAN] of a Universal Mobile Telecommunications System [UMTS].

6. Telecommunication system according to claim 1,
***characterized in that*** said packet switching network (IP) is adapted to operate according to the Internet Protocol [IP].

7. Telecommunication system according to claim 6,
***characterized in that*** said intermediate gateway (MG0) is an anchor media gateway at the boundary of said external telecommunication network (TL) that is a network of the Internet type,

8. Telecommunication system according to claim 7,
***characterized in that*** the Internet type of said external telecommunication network (TL) is different from the Internet type of said packet switching network (IP).

9. Telecommunication system according to claim 1,
***characterized in that*** said intermediate gateway (MG0) is an anchor media gateway at the boundary of said external telecommunication network (TL) that is a Public Switched Telephone Network [PSTN].

10. Telecommunication system according to claim 1,
***characterized in that*** the reference values belong to a predetermined series of timestamps.

11. Telecommunication system according to claim 1,
***characterized in that*** the reference values belong to a predetermined series of successive sequence numbers.

12. Method to handle a hand-over procedure of a mobile telecommunication terminal (MT) coupled to a second telecommunication terminal (TS) via a media gateway (MG1, MG2) of a mobile access network (UTRAN) and an intermediate gateway (MG0) of a packet switching network (IP),
said mobile telecommunication terminal (MT) being coupled to a first media gateway (MG1) before said hand-over procedure and being coupled to a second media gateway (MG2) after said hand-over procedure,
in said method the media gateway (MG1, MG2) coupled to the mobile terminal (MT):
- generates reference values of a predetermined series,
- encapsulates data from the mobile terminal into packets and associates each packet with a distinct one of said reference values, and
- transmits the packets and the associated reference values to said intermediate gateway (MG0),
the reference values of a first predetermined series generated by said first media gateway (MG1) being different from the reference values of a second predetermined series generated by said second media gateway (MG2),
***characterized in that,*** after said hand-over procedure, said intermediate gateway (MG0) calculates the difference between a reference value of said second predetermined series received from said second media gateway (MG2) and a corresponding reference value of said first predetermined series,
***in that,*** after the calculation, the intermediate gateway (MG0) transmits said difference to said second media gateway (MG2),
***and in that,*** upon reception of said difference, said second media gateway (MG2) modifies said second predetermined series of reference values in order to synchronize said second predetermined series with said first predetermined series according to said difference received from said intermediate gateway (MG0).

13. Method according to claim 12, ***characterized in that*** said second media gateway (MG2) modifies said second predetermined series by subtracting said difference from the reference values of said second predetermined series.

14. Method according to claim 13, ***characterized in that*** said intermediate gateway (MG0) detects the changes from said first media gateway (MG1) to said second media gateway (MG2) and accordingly performs a temporary recalculation of the reference values of said second predetermined series into corresponding reference values of said first predetermined series until reference values of the modified second predetermined series is received at said intermediate gateway (MG0).
